# EUROPÄISCHE PATENTSCHRIFT

(11) **EP 3 026 350 B1**
(45) Veröffentlichungstag und Bekanntmachung des Hinweises auf die Patenterteilung: **13.12.2017**
(21) Anmeldenummer: 15191616.0
(22) Anmeldetag: 27.10.2015
(51) Int. Cl.: F24C 15/20, F16B 5/06

(54) **DUNSTABZUGSHAUBE MIT EINER BAUEINHEIT**
EXTRACTOR HOOD HAVING A CONSTRUCTION UNIT
HOTTE ASPIRANTE DOTÉE D'UN COMPOSANT

(30) Priorität: 26.11.2014 DE 102014117287
(43) Veröffentlichungstag der Anmeldung: 01.06.2016
(73) Patentinhaber: Miele & Cie. KG, 33332 Gütersloh (DE)
(72) Erfinder: Baehr, Thomas, 59846 Sundern (DE); Ricke, Michael, 59757 Arnsberg (DE)

(56) Entgegenhaltungen:
- EP-A2- 0 978 661
- EP-A2- 2 378 209
- DE-A1-102013 103 190
- DE-U1- 8 310 264

## Beschreibung

Dunstabzugshaube Die vorliegende Erfindung betrifft eine Dunstabzugshaube mit einer Baueinheit. Eine solche Baueinheit kann insbesondere ein Gehäuse oder einen Gehäuseteil zur Verfügung stellen. Die Baueinheit umfasst wenigstens ein erstes Bauteil, wenigstens ein zweites Bauteil. Dabei weist das erste Bauteil wenigstens einen Umformabschnitt mit wenigstens einem oberen, einem unteren und einem seitlichen Abschnitt auf. Auch das zweite Bauteil weist wenigstens einen Umformabschnitt auf, wobei der Umformabschnitt des ersten Bauteils zur Verbindung der beiden Bauteile den Umformabschnitt des zweiten Bauteils wenigstens abschnittsweise umgreift.

Die Gehäuse von Dunstabzugshauben werden oft aus verschiedenen Komponenten bzw. Gehäuseteilen zusammengesetzt. Dabei werden oft Blechteile verwendet, die auch in bestimmten Baugruppen vormontiert werden können. Aus den einzelnen Blechteilen und/oder Baugruppen wird dann das vollständige Gehäuse zusammengesetzt.

Aus der Druckschrift EP 2 378 209 A2 ist eine Dunstabzugshaube bekannt, welche mit einer Wrasenschirmplatte, einer Sichthaube und einem Lüfterkasten mehrere Bauteile einer Baueinheit aufweist. Die gezeigte Dunstabzugshaube weist auch ein Befestigungselement zum Verbinden von wenigstens zwei der Bauteile auf. Die Druckschrift DE10 2013 103 190 A1 offenbart eine Baueinheit mit zwei Bauteilen und ein Fixiermittel zum klemmenden Verbinden der beiden Bauteile.

Bei Dunstabzugshauben werden zum Beispiel das Frontpanel und die Schwadenblende als separate Bauteile gefertigt. Durch zwei separate Blechformteile ist die Herstellung der einzelnen Bauteile einfacher und kostengünstiger.

Die beiden Bauteile werden dann bei der Montage der Dunstabzugshaube zusammengesetzt. Dazu sind an den beiden Bauteilen entsprechende Verbindungsabschnitte vorgesehen, sodass das eine Bauteil wenigstens abschnittsweise in das andere Bauteil eingeschoben werden kann. So kann auch eine Versteifung der beiden Bauteile erreicht werden, wenn die Verbindungsabschnitte sich im Wesentlichen form- und kraftschlüssig gegeneinander abstützen. Anschließend werden die beiden Bauteile dann üblicherweise verschraubt.

Um eine ausreichende Stabilität der Verbindung der Bauteile zu garantieren, müssen diese jedoch sehr exakt aufeinander angepasst. Dann ist es dann wiederum notwendig, dass mit sehr geringen Fertigungstoleranzen gearbeitet wird, sodass die Bauteile auch immer passgenau ineinandergesteckt werden können. Sind die Bauteile nur geringfügig zu klein ausgeführt, ist eine ausreichende Versteifung nicht mehr gegeben. Sind die Bauteile geringfügig zu groß ausgeführt, können sie nicht mehr ineinandergeschoben werden. Durch die notwendigen geringen Fertigungstoleranzen werden die Kosten jedoch wieder nicht unerheblich erhöht.

Zudem ist die Montage der passgenau angefertigten Bauteile aufwändig, da die beiden Bauteil durch das geringe Spiel zwischen den Bauteilen nur relativ schwierig ineinandergeschoben werden können.

Es ist daher die Aufgabe der vorliegenden Erfindung, für die Fertigung einer Dunstabzugshaube eine kostengünstige Baueinheit zur Verfügung zu stellen, wobei die Bauteile der Baueinheit einfach und zuverlässig miteinander verbunden bzw. versteift werden können.

Diese Aufgabe wird gelöst durch eine Dunstabzugshaube mit den Merkmalen des Anspruchs 1. Bevorzugte Weiterbildungen der Erfindung sind Gegenstand der Unteransprüche. Weitere Vorteile und Merkmale der Erfindung ergeben sich aus den Ausführungsbeispielen.

Die erfindungsgemäße Dunstabzugshaube umfasst die Baueinheit mit wenigstens einem ersten Bauteil und wenigstens einem zweiten Bauteil. Das erste Bauteil weist wenigstens einen Umformabschnitt mit wenigstens einem oberen, wenigstens einem unteren und wenigstens einem seitlichen Abschnitt auf. Auch das zweite Bauteil weist wenigstens einen Umformabschnitt auf. Dabei umgreift der Umformabschnitt des ersten Bauteils zur Verbindung der beiden Bauteile den Umformabschnitt des zweiten Bauteils wenigstens abschnittsweise. Weiterhin ist zwischen dem oberen und/oder dem unteren Abschnitt des Umformabschnitts des ersten Bauteils und dem Umformabschnitt des zweiten Bauteils wenigstens ein Freiraum vorgesehen. Es ist wenigstens eine Versteifungseinrichtung vorgesehen, die dazu geeignet und ausgebildet ist, wenigstens abschnittsweise den Freiraum zwischen den Umformabschnitten auszufüllen, um eine im Wesentlichen formschlüssige Verbindung zwischen den beiden Bauteilen herzustellen. Unter einer Baueinheit ist erfindungsgemäß insbesondere ein Gehäuse bzw. ein Gehäuseabschnitt oder eine Baugruppe eines Gehäuses einer Dunstabzugshaube zu verstehen. Dabei werden bevorzugt zwei Bauteile eines Gehäuses einer Flachpanelhaube zu dieser Baueinheit zusammengesetzt. Dann kann vorzugsweise das erste Bauteil als erstes Gehäuseblech bzw. Schwadenblech ausgebildet sein und das zweite Bauteil kann vorzugsweise als zweites Gehäuseteil bzw. als Frontpanel ausgebildet sein.

Der obere, der untere und der seitliche Abschnitt des Umformabschnitts des ersten Bauteils werden bevorzugt durch eine doppelte Abkantung erreicht, wodurch das erste Bauteil bzw. der Umformabschnitt des ersten Bauteils den Umformabschnitt des zweiten Bauteils umgreifen kann.

Die Umformabschnitte stellen somit erfindungsgemäß Kontaktabschnitte bzw. Verbindungsabschnitte der beiden Bauteile zueinander zur Verfügung. Weiterhin ist erfindungsgemäß zwischen den beiden Umformabschnitten der beiden Bauteile wenigstens ein Freiraum vorgesehen, wobei dieser Freiraum durch ein gewisses Spiel zwischen den beiden Bauteilen verwirklicht wird.

Erfindungsgemäß kann das zweite Bauteil insbesondere in das erste Bauteil eingeschoben werden. Dabei kann bevorzugt wenigstens der Umformabschnitt des zweiten Bauteils in den bzw. die Umformungsabschnitte des ersten Bauteils eingeschoben werden. Dadurch kommt es zu einer losen Verbindung zwischen den beiden Bauteilen. So sind die beiden Bauteile zwar noch nicht fest verbunden bzw. versteift, sie können jedoch nicht ohne Weiteres wieder auseinanderfallen. Durch den Freiraum zwischen dem Umformabschnitt des ersten Bauteils und dem Umformabschnitt des zweiten Bauteils können die beiden Bauteile besonders einfach ineinandergeschoben werden.

Erfindungsgemäß wird durch die Versteifungseinrichtung eine im Wesentlichen formschlüssige Verbindung zwischen den beiden Bauteilen hergestellt, wobei hierbei insbesondere eine formschlüssige Verbindung zwischen den beiden Bauteilen bevorzugt ist, welche über einen wesentlichen Abschnitt der Umformabschnitt besteht.

Die erfindungsgemäße Baueinheit bietet viele Vorteile. Durch den vorgesehenen Freiraum zwischen den beiden Bauteilen und durch das Versteifungsmittel, welches den Freiraum bei der Montage der beiden Bauteile ausfüllt, wird es möglich, dass die beiden Bauteile mit wesentlich größeren Fertigungstoleranzen hergestellt werden können. Durch die Versteifungseinrichtung ist es nämlich möglich, dass die beiden Bauteile zunächst lose ineinandergeschoben werden und anschließend mit der Versteifungseinrichtung ausreichend fest und im Wesentlichen formschlüssig miteinander verbunden werden. Dabei gleicht die Versteifungseinrichtung vorhandene Fertigungstoleranzen der beiden Bauteile effektiv aus. Durch die größeren Fertigungstoleranzen können nicht unerhebliche Kosten in der Herstellung eingespart werden.

Bevorzugt ist die Versteifungseinrichtung dazu geeignet und ausgebildet, eine im Wesentlichen kraftschlüssige Verbindung zwischen den beiden Bauteilen herzustellen. Dadurch wird erreicht, dass die beiden Bauteile formschlüssig und kraftschlüssig verbunden werden. So können die beiden Bauteile ausreichend versteift werden, wodurch eine stabile Verbindung zwischen den beiden Bauteilen hergestellt ist.

Besonders bevorzugt ist zwischen dem seitlichen Abschnitt des Umformabschnitts des ersten Bauteils und dem Umformabschnitt des zweiten Bauteils wenigstens ein weiterer Freiraum vorgesehen, wobei die Versteifungseinrichtung dazu geeignet und ausgebildet ist, wenigstens abschnittsweise auch diesen Freiraum auszufüllen. Durch diesen weiteren Freiraum kann ein größeres Spiel zwischen den beiden Bauteilen erreicht werden, wodurch die Montage der beiden Bauteile bzw. das Einschieben des einen Bauteils in das andere Bauteil noch mehr vereinfacht werden kann. Anschließend wird die Versteifungseinrichtung zwischen den beiden Bauteilen platziert, wodurch der bzw. die Freiräume zwischen den beiden Bauteilen formschlüssig und insbesondere kraftschlüssig ausgefüllt werden, wodurch eine form- und kraftschlüssige Verbindung der beiden Bauteile hergestellt ist.

Vorzugsweise ist die Versteifungseinrichtung in den ersten und/oder den zweiten Freiraum wenigstens abschnittsweise einschiebbar. Die beiden Bauteile werden dann einfach ineinander gesteckt bzw. geschoben. Der Freiraum bzw. die Freiräume zwischen den beiden Bauteilen können dann durch das Einschieben der Versteifungseinrichtung einfach derart ausgefüllt werden, dass eine sichere Versteifung der beiden Bauteile zueinander erreicht wird.

In vorteilhaften Weiterbildungen ist der Umformabschnitt des ersten Bauteils im Wesentlichen U-förmig ausgestaltet und/oder der Umformabschnitt des zweiten Bauteils ist im Wesentlichen L-förmig ausgestaltet. Durch eine derartige Ausgestaltung wird sichergestellt, dass das zweite Bauteil bzw. der Umformabschnitt des zweiten Bauteils in das erste Bauteil bzw. in den Umformabschnitt des ersten Bauteils eingeschoben werden kann. Zudem kann eine Abstützung des vertikalen Schenkels des L-förmig Umformabschnitts gegenüber dem seitlichen Abschnitt des Umformabschnitts des ersten Bauteils erreicht werden, wodurch eine besonders sichere Versteifung erfolgen kann.

Bevorzugt stützt sich wenigstens ein Schenkel des Umformabschnitts des ersten Bauteils wenigstens abschnittsweise an dem Umformabschnitt des zweiten Bauteils ab. Dadurch kann erreicht werden, dass durch das Platzieren der Versteifungseinrichtung in dem Freiraum zwischen den beiden Bauteilen das eine Bauteil gegen das andere gedrückt wird, wodurch eine im Wesentlichen formschlüssige und/oder kraftschlüssige Verbindung der beiden Bauteile hergestellt wird.

Besonders bevorzugt umfasst die Versteifungseinrichtung wenigstens einen Anlageabschnitt zur Anlage an dem Umformabschnitt des ersten Bauteils und/oder wenigstens einen Anlageabschnitt zur Anlage an dem Umformabschnitt des zweiten Bauteils. Hierdurch wird sichergestellt, dass sich die beiden Bauteile an der Versteifungseinrichtung abstützen können, um eine effektive Versteifung der beiden Bauteile zu erreichen.

In zweckmäßigen Ausgestaltungen weist der Anlageabschnitt für den Umformabschnitt des zweiten Bauteils wenigstens eine Anlaufschräge auf. Eine solche Anlaufschräge wirkt insbesondere als Führung bzw. als Einführhilfe. So kann die Montage bzw. das Einschieben der Versteifungseinrichtung erleichtert werden. Zudem wird erreicht, dass eine im Wesentlichen gleichmäßige Klemmung über die gesamte Länge der Versteifungseinrichtung erfolgt, wobei gleichzeitig das Einschieben der Versteifungseinrichtung durch die Anlaufschräge bzw. auch durch mehrere Anlaufschrägen erheblich vereinfacht wird.

Vorzugsweise umfasst auch der Umformabschnitt des zweiten Bauteils wenigstens eine Anlaufschräge. Dann kann insbesondere in Verbindung mit der Anlaufschräge bzw. den Anlaufschrägen des Anlageabschnitts der Versteifungseinrichtung eine im Wesentlichen gleichmäßige Klemmung über die gesamte Länge der Versteifungseinrichtung erreicht werden. Zudem wird auch durch die Anlaufschräge an dem Umformabschnitt des zweiten Bauteils die Montage der Versteifungseinrichtung erleichtert. Die Anlaufschrägen des zweiten Bauteils und der Anlagefläche der Versteifungseinrichtung sind insbesondere als korrespondierende Anlaufschrägen ausgeführt. So wird eine effektive Führung und Einführhilfe zur Erleichterung der Montage bereitgestellt.

Dazu sind bevorzugt die Anlaufschrägen aufeinander abgestimmt. Insbesondere wenn mehrere Anlaufschrägen vorgesehen sind, kann so eine treppenartige Struktur zur Verfügung gestellt werden, wodurch das Einschieben auch von langen Versteifungseinrichtungen in den Freiraum zwischen den beiden Bauteilen erleichtert wird.

Bevorzugt ist eine im Wesentlichen formschlüssige und/oder kraftschlüssige Anlage des Anlageabschnitts an dem ersten Bauteil und/oder des Anlageabschnitts an dem zweiten Bauteil durch ein im Wesentlichen vollständiges Einschieben der Versteifungseinrichtung erreichbar. Dadurch wird erreicht, dass es zum Formschluss bzw. zum Kraftschluss erst dann kommt, wenn die gesamte Versteifungseinrichtung vollständig zwischen die beiden Bauteile geschoben ist. Dabei wird die Versteifungseinrichtung über die Anlaufschrägen beim Einschieben geführt und die Versteifungseinrichtung verklemmt sich erst beim vollständigen Einschieben der Versteifungseinrichtung, indem sich die Versteifungseinrichtung beispielsweise zwischen den oberen Abschnitt des Umformabschnitts des ersten Bauteils und den Umformabschnitt des zweiten Bauteils klemmt.

Vorzugsweise umfasst der Umformabschnitt des zweiten Bauteils wenigstens eine Rastmulde und der Anlageabschnitt der Versteifungseinrichtung umfasst wenigstens eine Rastnase. Durch eine derartige Ausgestaltung kann eine zuverlässige Endposition der Versteifungseinrichtung zwischen den beiden Bauteilen vorgegeben werden. Zudem kann auch erreicht werden, dass die Versteifungseinrichtung nicht selbstständig wieder zwischen den beiden Bauteilen herausrutscht. In anderen vorteilhaften Ausgestaltungen kann auch das zweite Bauteil wenigstens eine Rastnase umfassen und der Anlageabschnitt wenigstens eine Rastmulde aufweisen. Bevorzugt ist die Rastnase und/oder die Rastmulde wenigstens abschnittsweise federnd ausgestaltet. Durch eine derartige Ausgestaltung können noch besser Toleranzen abgefangen, ausgeglichen und/oder überbrückt werden. Dabei sind die Rastnase und/oder die Rastmulde vorzugsweise nicht in den Anlaufschrägen vorgesehen.

In zweckmäßigen Weiterbildungen ist die formschlüssige und/oder die kraftschlüssige Verbindung der beiden Bauteile reversibel. So ist es unter anderem möglich, dass die beiden Bauteile trotz einer montierten Versteifungseinrichtung einfach wieder auseinandergezogen werden können. So wird es möglich, dass sowohl die Montage als auch die Demontage werkzeuglos und zudem einfach erfolgen kann.

Bevorzugt erfolgt die formschlüssige und oder die kraftschlüssige Verbindung der beiden Bauteile durch Haftreibung zwischen den beiden Bauteilen und der Versteifungseinrichtung. Auch hierdurch wird erreicht, dass eine schraublose Versteifung der beiden Bauteile zueinander erfolgt, da diese nur ineinandergesteckt sind und mittels der Versteifungseinrichtung gegeneinander verklemmt werden. Dadurch ist sowohl bei der Montage als auch bei der Demontage kein Werkzeug notwendig.

Besonders bevorzugt werden die beiden Bauteile wenigstens abschnittsweise ineinandergeschoben. Wie zuvor schon ausgeführt ist eine solche Ausgestaltung besonders vorteilhaft, da durch das Ineinanderschieben der beiden Bauteile eine bestimmte Vorfixierung der beiden Bauteile erreicht werden kann. Anschließend kann durch das Einschieben bzw. Vorsehen der Versteifungseinrichtung zwischen den beiden Bauteilen eine effektive Versteifung der beiden Bauteile erreicht werden.

In besonders bevorzugten Ausgestaltungen ist die Versteifungseinrichtung wenigstens abschnittsweise aus Kunststoff gefertigt. Dabei ist Kunststoff ein besonders geeignetes Material, da eine aus Kunststoff gefertigte Versteifungseinrichtung einfach zu fertigen ist, gewisse flexible Eigenschaften aufweist und zudem trotz einer klemmenden Wirkung die beiden zu versteifenden Bauteile nicht beschädigt.

Weitere Vorteile und Merkmale der vorliegenden Erfindung ergeben sich aus den Ausführungsbeispielen, welche im Folgenden mit Bezug auf die beiliegenden Figuren erläutert werden.

In den Figuren zeigen:
- Figur 1: eine rein schematische Darstellung einer erfindungsgemäßen Baueinheit ohne eingesetzte Versteifungseinrichtung in einer perspektivischen Ansicht;
- Figur 2: eine rein schematische Darstellung einer Versteifungseinrichtung einer erfindungsgemäßen Baueinheit in einer perspektivischen Ansicht;
- Figur 3: eine rein schematische Explosionsansicht einer erfindungsgemäßen Baueinheit;
- Figur 4: eine rein schematische Darstellung einer erfindungsgemäßen Baueinheit in einer Schnittansicht ohne Versteifungseinrichtung; und
- Figur 5: die Darstellung gemäß Figur 4 mit eingeschobener Versteifungseinrichtung.

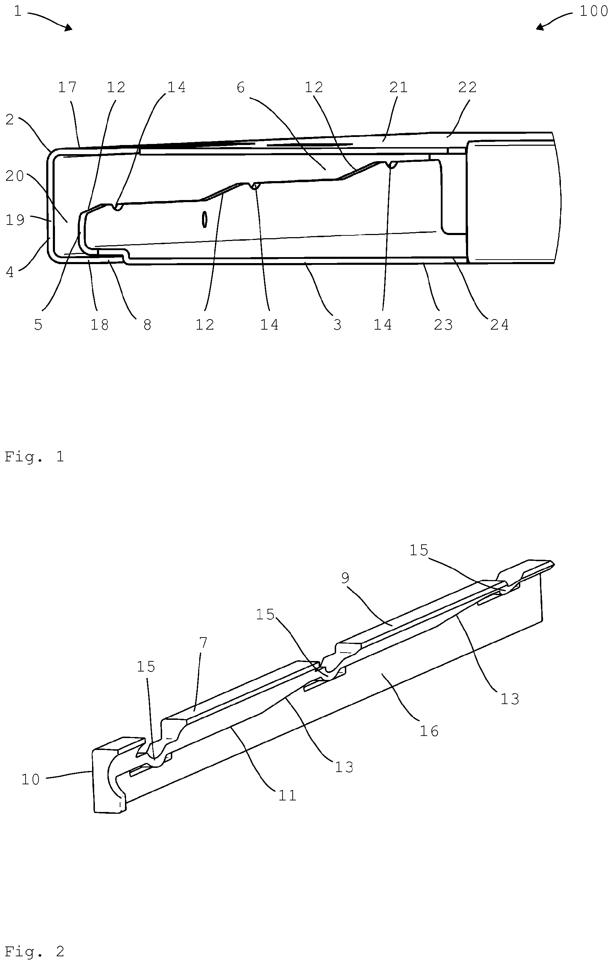

In Figur 1 ist rein schematisch eine erfindungsgemäße Baueinheit 1 in einer perspektivischen Ansicht dargestellt. Dabei ist das zweite Bauteil 3 in das erste Bauteil 2 eingeschoben, wobei die Versteifungseinrichtung 7 noch nicht zwischen den beiden Bauteilen 2, 3 angeordnet ist.

Die erfindungsgemäße Baueinheit 1 stellt einen Abschnitt einer Gehäuseeinrichtung bzw. eine Baugruppe eines Gehäuses einer Dunstabzugshaube 100 zur Verfügung. Dabei ist die Dunstabzugshaube 100 in dem hier gezeigten Ausführungsbeispiel als Flachpanelhaube ausgeführt.

Das erste Bauteil 2 stellt ein erstes Gehäuseblech 21 zur Verfügung, welches in dem hier gezeigten Ausführungsbeispiel als Schwadenblech 22 ausgeführt ist. Das zweite Bauteil stellt ein zweites Gehäuseblech 23 zur Verfügung, welches in dem hier gezeigten Ausführungsbeispiel als Frontpanel 24 ausgebildet ist.

Das erste Bauteil 2 weist einen Umformabschnitt 4 auf, welcher durch eine doppelte Abkantung in dem hier gezeigten Ausführungsbeispiel einen oberen Abschnitt 17, einen unteren Abschnitt 18 und einen seitlichen Abschnitt 20 umfasst. Durch diese Ausgestaltung ist der Umformabschnitt 4 des ersten Bauteiles im Wesentlichen U-förmig ausgebildet.

Der Umformabschnitt 5 des zweiten Bauteils 3 weist nur eine einfache Abkantung auf, wodurch dieser Umformabschnitt 5 im Wesentlichen L-förmig ausgestaltet ist. In anderen Ausgestaltungen können die Umformabschnitte 4, 5 der Bauteile 2, 3 aber auch jede beliebige andere Form aufweisen, die zweckmäßig für eine ausreichende Versteifung der beiden Bauteile 2, 3 eingesetzt werden kann.

Das zweite Bauteil 3 bzw. der Umformabschnitt 5 des zweiten Bauteils 3 ist in das erste Bauteil 2 bzw. in den Umformabschnitt 4 des ersten Bauteils 2 eingeschoben. Durch die spezielle Ausgestaltung des Umformabschnitts 4 des ersten Bauteils 2 und des Umformabschnitts 5 des zweiten Bauteils 3 ist eine gewisse Vorfixierung zwischen den beiden Bauteilen vorhanden, sodass die beiden Bauteile 2, 3 nicht unmittelbar wieder auseinanderfallen.

Zwischen den beiden Umformabschnitten 4, 5 ist ein Freiraum 6 vorgesehen, der in dem hier gezeigten Ausführungsbeispiel zwischen dem oberen Abschnitt 17 der Umformung 4 und dem Umformabschnitt 5 vorgesehen ist. Dieser Freiraum 6 resultiert aus einem beabsichtigten Spiel zwischen den beiden Bauteilen 2,3 wodurch diese besonders einfach ineinandergeschoben bzw. ineinander gesteckt werden können.

Zudem ist in dem hier gezeigten Ausführungsbeispiel ein weiterer Freiraum 20 vorgesehen, welcher zwischen dem seitlichen Abschnitt 19 des Umformabschnitts 4 des ersten Bauteils 2 und dem Umformabschnitt 5 des zweiten Bauteils 3 vorgesehen ist.

Die beiden Freiräume 6, 20 werden durch das Einschieben einer Versteifungseinrichtung 7 derart ausgefüllt, dass die beiden Bauteile 2,3 durch die Versteifungseinrichtung 7 gegeneinander verklemmt werden, wodurch eine Versteifung der beiden Bauteile erreicht wird.

In dem hier gezeigten Ausführungsbeispiel wird die Versteifungseinrichtung 7 in den Freiraum 6 bzw. in die Freiräume 6, 20 einfach eingeschoben. Damit das Einschieben über die gesamte Länge möglichst einfach ermöglicht wird, weist der Umformabschnitt 5 des zweiten Bauteils in dem hier gezeigten Ausführungsbeispiel drei Anlaufschrägen 12 auf, entlang welcher die Versteifungseinrichtung 7 geführt wird.

Dazu weist die Versteifungseinrichtung 7 korrespondierende Anlaufschrägen 13 auf, wobei eine formschlüssige und/oder kraftschlüssige Verbindung zwischen den Bauteilen 2, 3 und der Versteifungseinrichtung 7 erst erfolgt, sobald die Versteifungseinrichtung 7 vollständig in den Freiraum 6 bzw. in die Freiräume 6, 20 eingeschoben ist.

Der Umformabschnitt 5 des zweiten Bauteils 3 umfasst zudem in dem hier gezeigten Ausführungsbeispiel mehrere Rastmulden 14, in welche entsprechende Rastnasen 15 der Versteifungseinrichtung 7 eingreifen können. Dadurch wird eine sichere und definierte Endlage der Versteifungseinrichtung 7 zwischen den beiden Bauteilen 2, 3 sichergestellt.

Durch das vollständige Einschieben der Versteifungseinrichtung 7 zwischen die beiden Bauteile 2, 3 klemmt sich die Versteifungseinrichtung 7 zwischen den oberen Abschnitt 17 des Umformabschnitts 4 und den Umformabschnitt 5 des zweiten Bauteils 3. Dadurch wird der Freiraum 6 zwischen den beiden Bauteilen 2, 3 in dem hier gezeigten Ausführungsbeispiel vollständig ausgefüllt und es kommt zudem zu einer Klemmung zwischen dem unteren Abschnitt ab 18 bzw. dem Schenkel 8 des Umformabschnitts 4 und dem Umformabschnitt 5.

Dadurch wird eine formschlüssige und/oder kraftschlüssige Verbindung zwischen der Versteifungseinrichtung 7 und den beiden Bauteilen 2, 3 erreicht, wodurch eine ausreichende Versteifung der beiden Bauteile 2,3 zueinander ermöglicht wird.

Die Versteifungseinrichtung 7 ist in Figur 2 rein schematisch in einer perspektivischen Ansicht dargestellt. Dabei umfasst die Versteifungseinrichtung 7 einen Anlageabschnitt 9, welcher an dem oberen Abschnitt 17 des ersten Umformabschnitts 4 anliegt. Weiterhin umfasst die Versteifungseinrichtung 7 einen Anlageabschnitt 10, welcher an dem seitlichen Abschnitt 19 des Umformabschnitts 4 des ersten Bauteils 2 anliegt. Zudem umfasst die Versteifungseinrichtung 7 einen Anlageabschnitt 11, welcher in Wirkverbindung zu dem Umformabschnitt 5 des zweiten Bauteils 3 tritt. Dabei weist dieser Anlageabschnitt 11 korrespondierende Anlaufschrägen 13 auf, welche eine ausreichende Führung und zudem eine Einführhilfe zur Verfügung stellen, wodurch die Versteifungseinrichtung 7 besonders einfach zwischen die beiden Bauteile 2, 3 geschoben werden kann.

An dem Anlageabschnitt 11 sind zudem Rastnasen 15 vorgesehen, welche korrespondierend zu den Rastmulden 14 des Umformabschnitts 5 des zweiten Bauteils 3 vorgesehen sind. Durch die Rastnasen 15 und die Rastmulde 14 kann eine vorbestimmte Endlage der Versteifungseinrichtung 7 zwischen den beiden Bauteilen 2, 3 vorgegeben werden, wobei die Rastnasen 15 und die Rastmulde 14 zudem die Versteifungseinrichtung 7 in einer bestimmten Position festlegen bzw. fixieren.

Um Fertigungstoleranzen der beiden Bauteile 2,3 besser ausgleichen zu können, sind die Rastnasen 15 im Wesentlichen federnd ausgestaltet. Dies wird in dem hier gezeigten Ausführungsbeispiel durch die spezielle Formgebung der Rastnasen 15 erreicht, wobei die Versteifungseinrichtung 7 in dem hier gezeigten Ausführungsbeispiel zudem vollständig aus Kunststoff 16 gefertigt ist. Auch dadurch kann eine gewisse federnde Eigenschaft der Versteifungseinrichtung 7 bzw. der Rastnasen 15 erreicht werden.

Durch die federnd ausgestalteten Rastnasen 15 wird erreicht, dass gewisse Fertigungstoleranzen der Bauteile 2, 3 durch ein Wegfedern der Rastnasen beim Eintreten in die Rastmulde 14 ausgeglichen werden können. Durch die so möglichen größeren Fertigungstoleranzen der Bauteile 2, 3 können nicht unerhebliche Kosten bei der Produktion der beiden Bauteile 2, 3 eingespart werden. Es ist nämlich nicht mehr notwendig, die beiden Bauteile mit extrem geringen Fertigungstoleranzen zu fertigen, sodass diese alleine durch das Zusammensetzen der beiden Bauteile schon annähernd versteift sind. Weiterhin ist eine schraublose bzw. werkzeuglose Montage der beiden Bauteile möglich, da die Versteifungseinrichtung 7 einfach zwischen die beiden Bauteile bzw. in den Freiraum 6 bzw. in die Freiräume 6,20 eingeschoben wird.

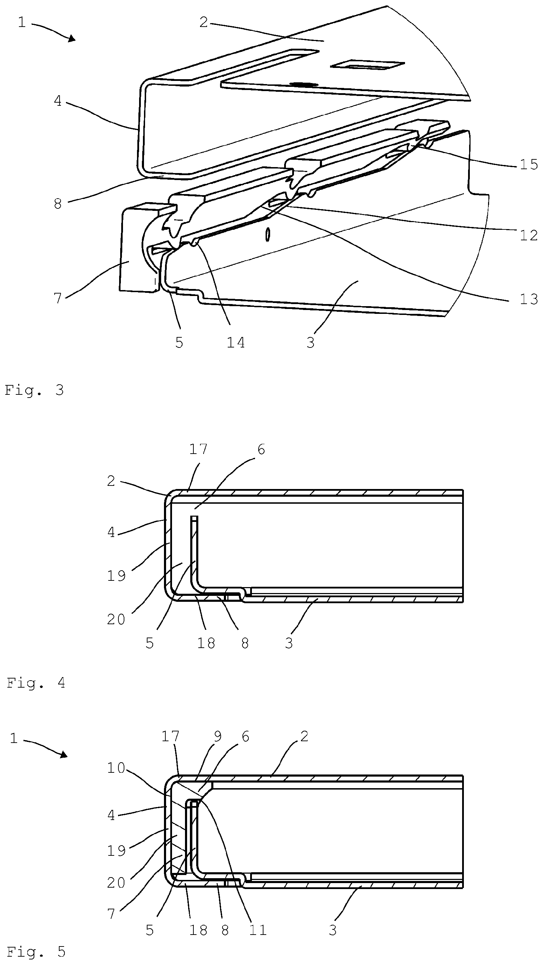

In Figur 3 sind die beiden Bauteile 2, 3 und die Versteifungseinrichtung 7 rein schematisch in einer Explosionsdarstellung abgebildet. Dabei erkennt man, wie die Versteifungseinrichtung 7 mit den Rastnasen 15 über die Anlaufschrägen 12 des Umformabschnitts 5 des zweiten Bauteils 3 geführt ist. Dabei ist der Umformabschnitt 5 in dem hier gezeigten Ausführungsbeispiel im Wesentlichen treppenförmig ausgebildet, wodurch ein besonders einfaches Einschieben der Versteifungseinrichtung 7 zwischen die beiden Bauteile erreicht wird.

Wenn die Rastnasen 15 in Wirkverbindung zu den Rastmulden 14 treten, liegen die korrespondierenden Anlaufschrägen 12 des Umformabschnitts 5 und die Anlaufschrägen 13 des Anlageabschnitts 11 der Versteifungseinrichtung 7 im Wesentlichen bündig aneinander. Dadurch, dass die Rastnasen federnd ausgestaltet sind, können Fertigungstoleranzen der beiden Bauteile 2, 3 effektiv ausgeglichen werden.

In Figur 4 sind rein schematisch die beiden schon ineinandergeschoben Bauteile 2, 3 in einer rein schematischen Schnittansicht von vorne dargestellt, wobei die Versteifungseinrichtung 7 noch nicht zwischen den beiden Bauteilen 2, 3 angeordnet ist. Auch hier erkennt man, dass der U-förmig Umformabschnitt 4 den L-förmigen Umformabschnitt 5 des zweiten Bauteils abschnittsweise umgreift. Dabei ist zwischen dem oberen Abschnitt 17 des Umformabschnitts 4 des ersten Bauteils und dem Umformabschnitt 5 des zweiten Bauteils ein Freiraum 6 vorgesehen. Weiterhin ist zwischen dem seitlichen Abschnitt 19 des ersten Bauteils 2 und dem Umformabschnitt 5 des zweiten Bauteils 3 ein weiterer Freiraum 20 vorgesehen.

In Figur 5 ist die Darstellung gemäß Figur 4 erneut dargestellt, wobei auch die eingesetzte Versteifungseinrichtung 7 abgebildet ist.

Man erkennt, dass es zu einer Versteifung der beiden Bauteile 2, 3 durch eine Klemmung des Schenkels 8 des Umformabschnitts 4 gegen den Umformabschnitt 5 und durch eine Klemmung des oberen Abschnitts 17 des Umformabschnitts 4 und dem Umformabschnitt 5 kommt. Dabei wird diese Klemmung durch die Versteifungseinrichtung 7 erreicht, wobei sich diese in den Freiraum 6 zwischen den beiden Bauteilen eingeklemmt. Die Klemmung erfolgt hierbei in dem hier gezeigten Ausführungsbeispiel erst dann, wenn die Versteifungseinrichtung vollständig zwischen die beiden Bauteile eingeschoben ist.

Zudem ist in dem hier gezeigten Ausführungsbeispiel die Versteifungseinrichtung derart ausgebildet, dass sie auch den Freiraum 20 zwischen dem seitlichen Abschnitt 19 des Umformabschnitts 4 und dem Umformabschnitt 5 ausfüllt. Dadurch kommt es zu einer besonders vorteilhaften Führung der Versteifungseinrichtung 7 in den Freiräumen 6, 20. Dadurch wird das Einführen der Versteifungseinrichtung noch mehr vereinfacht. Es wird weiterhin eine besonders effektive Versteifung der beiden Bauteile 2, 3 erreicht.

### Bezugszeichenliste

- 1: Baueinheit
- 2: erstes Bauteil
- 3: zweites Bauteil
- 4: Umformabschnitt
- 5: Umformabschnitt
- 6: Freiraum
- 7: Versteifungseinrichtung
- 8: Schenkel
- 9: Anlageabschnitt
- 10: Anlageabschnitt
- 11: Anlageabschnitt
- 12: Anlaufschräge
- 13: Anlaufschräge
- 14: Rastmulde
- 15: Rastnase
- 16: Kunststoff
- 17: Abschnitt
- 18: Abschnitt
- 19: Abschnitt
- 20: Freiraum
- 21: erstes Gehäuseblech
- 22: Schwadenblech
- 23: zweites Gehäuseblech
- 24: Frontpanel
- 100: Dunstabzugshaube

## Patentansprüche

1. Dunstabzugshaube (100) mit einer Baueinheit (1), wobei die Baueinheit (1) wenigstens ein erstes Bauteil (2) und wenigstens ein zweites Bauteil (3) umfasst, wobei das erste Bauteil (2) wenigstens einen Umformabschnitt (4) mit wenigstens einem oberen (17), einem unteren (18) und einem seitlichen Abschnitt (19) aufweist und wobei das zweite Bauteil (3) wenigstens einen Umformabschnitt (5) aufweist, wobei der Umformabschnitt (4) des ersten Bauteils (2) zur Verbindung der beiden Bauteile (2, 3) den Umformabschnitt (5) des zweiten Bauteils wenigstens abschnittsweise umgreift,
**dadurch gekennzeichnet,**
**dass** zwischen dem oberen (17) und/oder dem unteren Abschnitt (18) des Umformabschnitts (4) des ersten Bauteils (2) und dem Umformabschnitt (5) des zweiten Bauteils (3) wenigstens ein Freiraum (6) vorgesehen ist und dass wenigstens eine Versteifungseinrichtung (7) vorgesehen ist, die dazu geeignet und ausgebildet ist, wenigstens abschnittsweise den Freiraum (6) zwischen den Umformabschnitten (4, 5) auszufüllen, um eine formschlüssige und/oder kraftschlüssige Verbindung zwischen den beiden Bauteilen (2, 3) herzustellen.

2. Dunstabzugshaube (100) mit einer Baueinheit (1) nach einem der vorhergehenden Ansprüche, wobei zwischen dem seitlichen Abschnitt (19) des Umformabschnitts (4) des ersten Bauteils (2) und dem Umformabschnitt (5) des zweiten Bauteils (3) wenigstens ein Freiraum (20) vorgesehen ist und die Versteifungseinrichtung (7) in dem Freiraum (20) angeordnet ist.

3. Dunstabzugshaube (100) mit einer Baueinheit (1) nach einem der vorhergehenden Ansprüche, wobei die Versteifungseinrichtung (7) in den wenigstens einen der Freiräume (6, 20) zumindest abschnittsweise eingeschoben ist und/oder die beiden Bauteile (2, 3) wenigstens abschnittsweise ineinandergeschoben sind.

4. Dunstabzugshaube (100) mit einer Baueinheit (1) nach einem der vorhergehenden Ansprüche, wobei der Umformabschnitt (4) des ersten Bauteiles (2) im Wesentlichen U-förmig ausgestaltet ist und/oder dass der Umformabschnitt (5) des zweiten Bauteiles (3) im Wesentlichen L-förmig ausgestaltet ist.

5. Dunstabzugshaube (100) mit einer Baueinheit (1) nach dem vorhergehenden Anspruch, wobei sich wenigstens ein Schenkel (8) des Umformabschnitts (4) des ersten Bauteils (2) wenigstens abschnittsweise an dem Umformabschnitt (5) des zweiten Bauteils (3) abstützt.

6. Dunstabzugshaube (100) mit einer Baueinheit (1) nach einem der vorhergehenden Ansprüche, wobei die Versteifungseinrichtung (7) wenigstens einen Anlageabschnitt (9, 10) zur Anlage an dem Umformabschnitt (4) des ersten Bauteils (2) und/oder wenigstens einen Anlageabschnitt (11) zur Anlage an dem Umformabschnitt (5) des zweiten Bauteils (3) umfasst.

7. Dunstabzugshaube (100) mit einer Baueinheit (1) nach einem der vorhergehenden Ansprüche, wobei der Anlageabschnitt (11) für den Umformabschnitt (5) des zweiten Bauteils (3) und/oder der Anlageabschnitt (10) für den Umformabschnitt (4) des ersten Bauteils (2) wenigstens eine Anlaufschräge (12) aufweist.

8. Dunstabzugshaube (100) mit einer Baueinheit (1) nach einem der vorhergehenden Ansprüche, wobei der Umformabschnitt (5) des zweiten Bauteiles (3) und/oder der Umformabschnitt (4) des ersten Bauteils (2) wenigstens eine Anlaufschräge (13) umfasst.

9. Dunstabzugshaube (100) mit einer Baueinheit (1) nach einem der vorhergehenden Ansprüche, wobei durch ein im Wesentlichen vollständiges Einschieben der Versteifungseinrichtung (7) in den wenigstens einen der Freiräume (6, 20) eine im Wesentlichen formschlüssige und/oder kraftschlüssige Anlage des Anlageabschnitts (9, 10) an dem ersten Bauteil (2) und/oder des Anlageabschnitts (11) an dem zweiten Bauteil (3) erreichbar ist.

10. Dunstabzugshaube (100) mit einer Baueinheit (1) nach einem der vorhergehenden Ansprüche, wobei wenigstens der Umformabschnitt (5) des zweiten Bauteils (3) wenigstens eine Rastmulde (14) umfasst und dass wenigstens der Anlageabschnitt (11) wenigstens eine Rastnase (15) umfasst.

11. Dunstabzugshaube (100) mit einer Baueinheit (1) nach einem der vorhergehenden Ansprüche, wobei die formschlüssige und/oder kraftschlüssige Verbindung der beiden Bauteile (2, 3) reversibel ist.

12. Dunstabzugshaube (100) mit einer Baueinheit (1) nach einem der vorhergehenden Ansprüche, wobei die formschlüssige und/oder die kraftschlüssige Verbindung der beiden Bauteile (2, 3) durch Haftreibung zwischen den Bauteilen (2, 3) und der Versteifungseinrichtung (7) erfolgt.

13. Dunstabzugshaube (100) mit einer Baueinheit (1) nach einem der vorhergehenden Ansprüche, wobei die Versteifungseinrichtung (7) wenigstens abschnittsweise aus Kunststoff (16) gefertigt ist.

## Claims

1. Extractor hood (100) comprising a unit (1),
the unit (1) comprising at least one first component (2) and at least one second component (3), the first component (2) comprising at least one deformation portion (4) comprising at least an upper portion (17), a lower portion (18) and a side portion (19), and the second component (3) comprising at least one deformation portion (5), the deformation portion (4) of the first component (2) surrounding the deformation portion (5) of the second component at least in portions in order to connect the two components (2, 3),
**characterised in that**
at least one free space (6) is provided between the upper portion (17) and/or the lower portion (18) of the deformation portion (4) of the first component (2) and the deformation portion (5) of the second component (3), and **in that** at least one stiffening device (7) is provided, which is capable of and designed to fill the free space (6) between the deformation portions (4, 5) at least in portions in order to produce a form-fitting and/or force-fitting connection between the two components (2,3).

2. Extractor hood (100) comprising a unit (1) according to the preceding claim, wherein at least one free space (20) is provided between the side portion (19) of the deformation portion (4) of the first component (2) and the deformation portion (5) of the second component (3), and the stiffening device (7) is arranged in the free space (20).

3. Extractor hood (100) comprising a unit (1) according to either of the preceding claims, wherein the stiffening device (7) is inserted, at least in portions, into at least one of the free spaces (6, 20), and/or the two components (2, 3) are inserted one into the other at least in portions.

4. Extractor hood (100) comprising a unit (1) according to any of the preceding claims, wherein the deformation portion (4) of the first component (2) is substantially U-shaped, and/or the deformation portion (5) of the second component (3) is substantially L-shaped.

5. Extractor hood (100) comprising a unit (1) according to the preceding claim, wherein at least one leg (8) of the deformation portion (4) of the first component (2) is supported, at least in portions, on the deformation portion (5) of the second component (3).

6. Extractor hood (100) comprising a unit (1) according to any of the preceding claims, wherein the stiffening device (7) comprises at least one abutment portion (9, 10) for abutting the deformation portion (4) of the first component (2) and/or at least one abutment portion (11) for abutting the deformation portion (5) of the second component (3).

7. Extractor hood (100) comprising a unit (1) according to any of the preceding claims, wherein the abutment portion (11) and/or the abutment portion (10) comprise(s) at least one run-on slope (12) for the deformation portion (5) of the second component (3) and the deformation portion (4) of the first component (2), respectively.

8. Extractor hood (100) comprising a unit (1) according to any of the preceding claims, wherein the deformation portion (5) of the second component (3) and/or the deformation portion (4) of the first component (2) comprise(s) at least one run-on slope (13).

9. Extractor hood (100) comprising a unit (1) according to any of the preceding claims, wherein the stiffening device (7) being substantially fully inserted into at least one of the free spaces (6, 20) makes it possible for the abutment portion (9, 10) to abut the first component (2) and/or the abutment portion (11) to abut the second component (3) in a substantially form-fitting and/or force-fitting manner.

10. Extractor hood (100) comprising a unit (1) according to any of the preceding claims, wherein at least the deformation portion (5) of the second component (3) comprises at least one locking recess (14), and in that at least the abutment portion (11) comprises at least one locking projection (15).

11. Extractor hood (100) comprising a unit (1) according to any of the preceding claims, wherein the form-fitting and/or force-fitting connection between the two components (2, 3) is reversible.

12. Extractor hood (100) comprising a unit (1) according to any of the preceding claims, wherein the two components (2, 3) are connected in a form-fitting and/or force-fitting manner by means of static friction between the components (2, 3) and the stiffening device (7).

13. Extractor hood (100) comprising a unit (1) according to any of the preceding claims, wherein the stiffening device (7) is produced from plastics material (16) at least in portions.

## Revendications

1. Hotte aspirante de buée (100) avec une unité de structure (1), dans laquelle l'unité de structure (1) comprend tout au moins un premier élément de structure (2) et tout au moins un deuxième élément de structure (3) ;
dans laquelle le premier élément de structure (2) présente tout au moins une section de déformation (4) avec tout au moins une section supérieure (17), une section inférieure (18) et une section latérale (19) ; et
dans laquelle le deuxième élément de structure (3) présente tout au moins une section de déformation (5) ;
dans laquelle la section de déformation (4) du premier élément de structure (2) vient enserrer, tout au moins par sections, la section de déformation (5) du deuxième élément de structure en vue de la jonction des deux éléments de structure (2, 3) ;
**caractérisée en ce que**
tout au moins un espace libre (6) est prévu entre la section supérieure (17) et/ou la section inférieure (18) de la section de déformation (4) du premier élément de structure (2) et la section de déformation (5) du deuxième élément de structure (3) ; et
**caractérisée en ce que**
tout au moins un mécanisme de rigidification (7) est prévu, lequel est capable de et conçu en vue de remplir, tout au moins par sections, l'espace libre (6) se trouvant entre les sections de déformation (4, 5), en vue de produire une jonction par complémentarité de formes et/ou par conjonction de force entre les deux éléments de structure (2, 3).

2. Hotte aspirante de buée (100) avec une unité de structure (1) selon la revendication précédente, dans laquelle tout au moins un espace libre (20) est prévu entre la section latérale (19) de la section de déformation (4) du premier élément de structure (2) et la section de déformation (5) du deuxième élément de structure (3) et dans laquelle le mécanisme de rigidification (7) est disposé dans l'espace libre (20).

3. Hotte aspirante de buée (100) avec une unité de structure (1) selon l'une des revendications précédentes, dans laquelle le mécanisme de rigidification (7) est glissé, tout au moins par sections, dans au moins un des espaces libres (6, 20) et/ou les deux éléments de structure (2, 3) sont glissés l'un dans l'autre, tout au moins par sections.

4. Hotte aspirante de buée (100) avec une unité de structure (1) selon l'une des revendications précédentes, dans laquelle la section de déformation (4) du premier élément de structure (2) est configurée pour l'essentiel en forme de « U » et/ou **caractérisée en ce que** la section de déformation (5) du deuxième élément de structure (3) est configurée pour l'essentiel en forme de « L ».

5. Hotte aspirante de buée (100) avec une unité de structure (1) selon la revendication précédente, dans laquelle tout au moins une branche (8) de la section de déformation (4) du premier élément de structure (2) vient prendre appui, tout au moins par sections, au niveau de la section de déformation (5) du deuxième élément de structure (3).

6. Hotte aspirante de buée (100) avec une unité de structure (1) selon l'une des revendications précédentes, dans laquelle le mécanisme de rigidification (7) comprend tout au moins une section d'appui (9, 10) destinée à la prise d'appui au niveau de la section de déformation (4) du premier élément de structure (2) et/ou tout au moins une section d'appui (11) destinée à la prise d'appui au niveau de la section de déformation (5) du deuxième élément de structure (3).

7. Hotte aspirante de buée (100) avec une unité de structure (1) selon l'une des revendications précédentes, dans laquelle la section d'appui (11) et/ou la section d'appui (10) présente ou présentent tout au moins un chanfrein de départ (12) pour la section de déformation (5) du deuxième élément de structure (3), respectivement pour la section de déformation (4) du premier élément de structure (2).

8. Hotte aspirante de buée (100) avec une unité de structure (1) selon l'une des revendications précédentes, dans laquelle la section de déformation (5) du deuxième élément de structure (3) et/ou la section de déformation (4) du premier élément de structure (2) comprend ou comprennent tout au moins un chanfrein de départ (13).

9. Hotte aspirante de buée (100) avec une unité de structure (1) selon l'une des revendications précédentes, dans laquelle une prise d'appui de la section d'appui (9, 10) au niveau du premier élément de structure (2) et/ou une prise d'appui de la section d'appui (11) au niveau du deuxième élément de structure (3) peut être atteinte par l'intermédiaire d'un glissement, pour l'essentiel intégral, du mécanisme de rigidification (7) dans au moins un des espaces libres (6, 20), lesquelles prises d'appui sont obtenues, pour l'essentiel, par complémentarité de formes et/ou par conjonction de force.

10. Hotte aspirante de buée (100) avec une unité de structure (1) selon l'une des revendications précédentes, dans laquelle tout au moins la section de déformation (5) du deuxième élément de structure (3) comprend tout au moins un creux d'encliquetage (14) et **caractérisée en ce que** tout au moins la section d'appui (11) comprend tout au moins un taquet d'encliquetage (15).

11. Hotte aspirante de buée (100) avec une unité de structure (1) selon l'une des revendications précédentes, dans laquelle la jonction, par complémentarité de formes et/ou par conjonction de force, des deux éléments de structure (2, 3) est réversible.

12. Hotte aspirante de buée (100) avec une unité de structure (1) selon l'une des revendications précédentes, dans laquelle la jonction, par complémentarité de formes et/ou par conjonction de force, des deux éléments de structure (2, 3) est réalisée par l'intermédiaire d'une friction statique entre les éléments de structure (2, 3) et le mécanisme de rigidification (7).

13. Hotte aspirante de buée (100) avec une unité de structure (1) selon l'une des revendications précédentes, dans laquelle le mécanisme de rigidification (7) est fabriqué en matière plastique (16), tout au moins par sections.
